# FASCICULE DE BREVET EUROPEEN

(11) **EP 3 322 631 B1**
(45) Date de publication et mention de la délivrance du brevet: **04.12.2019**
(21) Numéro de dépôt: 16736160.9
(22) Date de dépôt: 07.07.2016
(51) Int. Cl.: B62D 1/06

(54) **PIECE DE DECORATION DE VOLANT DE VEHICULE**
DEKORATIVES TEIL FÜR EIN LENKRAD EINES FAHRZEUGS
DECORATIVE COVER FOR A STEERING WHEEL OF A VEHICLE

(30) Priorité: 13.07.2015 FR 1556646
(43) Date de publication de la demande: 23.05.2018
(73) Titulaire: Autoliv Development AB, 447 83 Vårgårda (SE)
(72) Inventeur: PEYROT, Mickael, 86190 Latillé (FR); MOULINAS, Frederic, 86000 Poitiers (FR)
(74) Mandataire: Poindron, Cyrille
(86) Numéro de dépôt international: PCT/EP2016/066094
(87) Numéro de publication internationale: WO 2017/009163

(56) Documents cités:
- EP-A1- 1 604 797
- EP-A2- 1 195 312
- WO-A1-02/051631

## Description

La présente invention concerne de manière générale une pièce de décoration destinée à être montée sur un véhicule automobile, et en particulier sur un volant de ce véhicule.

Il est connu dans l'art antérieur de recouvrir une matière de décoration telle que du bois avec un vernis transparent ou translucide pour obtenir une pièce de décoration agréable à regarder et à toucher et résistante à l'usure, telle que celle divulguée dans le document US2005276874. Cependant, le procédé de fabrication de la pièce de décoration divulguée est compliqué car il présente notamment l'inconvénient de requérir une deuxième étape au cours de laquelle une portion de fixation est réalisée sur l'envers de la pièce.

Le document EP1195312A2 divulgue le préambule des revendications indépendantes et divulgue un volant pourvu d'un élément d'habillage décoratif, dans lequel une pièce de décoration est fixée sur le volant avec des pattes de fixation rapportées.

Un but de la présente invention est de répondre aux inconvénients du document de l'art antérieur mentionnés ci-dessus et en particulier, tout d'abord, de proposer une pièce de décoration agencée pour être montée sur un volant de véhicule avec un aspect de qualité, tout en étant simple et bon marché à fabriquer.

Pour cela un premier aspect de l'invention concerne une pièce de décoration de véhicule agencée pour être montée sur un volant du véhicule, comprenant :
- un noyau décor réalisé dans une matière de décoration telle que du bois,
- une portion de protection du noyau décor, en matière transparente ou translucide recouvrant au moins une partie d'une surface du noyau décor agencée pour être visible par un utilisateur,
- une portion de fixation agencée pour fixer la pièce de décoration sur le volant,
caractérisée en ce que la portion de fixation est réalisée dans la même matière transparente ou translucide que la portion de protection. La pièce de décoration selon la présente mise en œuvre comprend donc un noyau décor réalisé dans la matière de décoration (du bois par exemple, mais aussi de la fibre de carbone, de Kevlar, de verre, ou un mélange de ces matières), et dont la surface visible, une fois la pièce de décoration montée sur le volant, est recouverte par une matière transparente ou translucide pour assurer protection, visuel et contact agréables pour l'utilisateur. Cependant, la fabrication de la pièce de décoration est aisée car la portion de fixation est réalisée dans la même matière transparente ou translucide. Cela permet de n'avoir qu'une seule matière à prévoir en plus de la matière du noyau décor. Cette standardisation permet de limiter les coûts, et aussi de simplifier les machines de fabrication qui n'ont qu'une seule matière à ajouter au noyau décor pour fabriquer la pièce de décoration.

On entend par matière transparente une matière qui laisse passer la lumière, qui ne fait pas écran à la vision, et on entend par matière translucide une matière qui laisse passer les rayons lumineux mais ne permet pas de distinguer nettement les contours ou les couleurs des objets.

Avantageusement, la portion de fixation présente au moins une section en forme de U. Une telle section est avantageuse pour coopérer avec le moussage du volant, cela permet de garantir un positionnement correct lors de l'assemblage. Cela est aussi utile pour garantir une dépose maitrisée d'une colle ou d'un adhésif qui peut être ajouté entre la pièce décor et le volant uniquement au fond de la section en forme de U.

Avantageusement, la portion de fixation comprend des moyens de retenue tels que des clips agencés pour maintenir la pièce de décoration sur le volant.

Avantageusement, la matière translucide est du polyuréthane. On peut envisager par exemple un polyuréthane injectable.

Avantageusement, la portion de protection et la portion de fixation sont réalisées en une seule et même opération. Cela permet de garantir un meilleur accostage entre la pièce de décoration et le volant puisque les tolérances entre la portion de fixation et le noyau décors sont réduites. En effet, une opération de reprise tel que proposée par l'art antérieur nécessite des jeux de positionnement qui sont nécessairement répercutés sur les tolérances dimensionnelles de la pièce décors finale.

Avantageusement, le noyau décor est entièrement recouvert par la matière transparente ou translucide.

Un deuxième aspect de l'invention concerne un volant de véhicule comprenant au moins une pièce de décoration selon le premier aspect.

Un troisième aspect de l'invention concerne un véhicule automobile comprenant au moins une pièce de décoration selon le premier aspect.

Un quatrième aspect de l'invention concerne un procédé de fabrication d'une pièce de décoration de véhicule agencée pour être montée sur un volant, comprenant les étapes consistant à :
- positionner dans un moule d'injection un noyau décor réalisé dans une matière de décoration telle que du bois,
- injecter une matière transparente ou translucide de manière à réaliser simultanément :
   une portion de protection du noyau décor en matière transparente ou translucide recouvrant au moins une partie d'une surface du noyau décor agencée pour être visible par un utilisateur, et
   une portion de fixation agencée pour fixer la pièce de décoration sur le volant, réalisée dans la même matière transparente ou translucide que la portion de protection.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique d'une pièce de décoration selon l'invention ;
- la figure 2 représente une coupe d'un volant de véhicule sur lequel est montée la pièce de décoration de la figure 1 ;
- la figure 3 représente une coupe de la pièce de décoration de la figure 1.

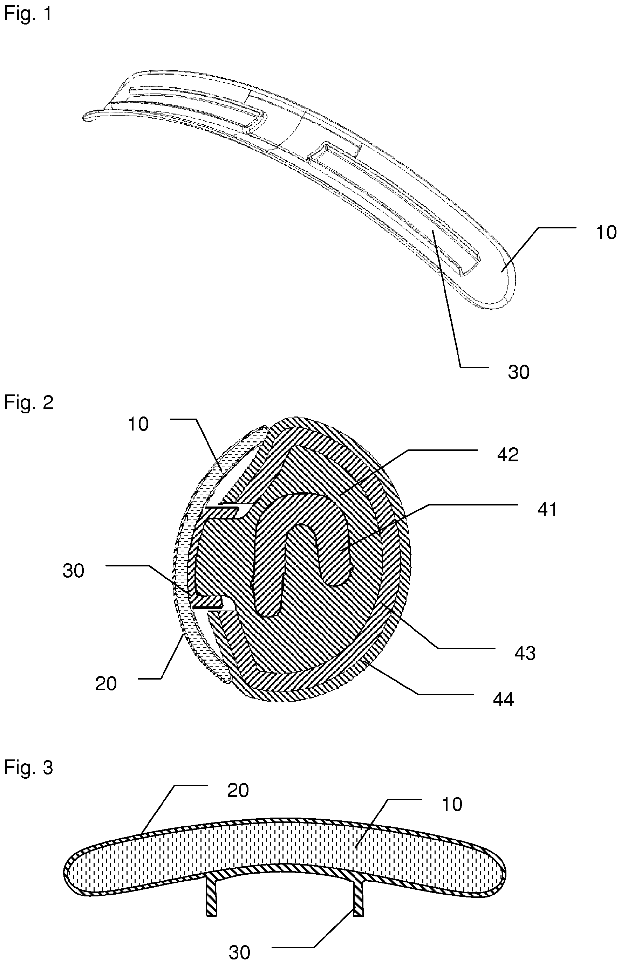

La figure 1 représente une vue isométrique d'une face arrière d'une pièce de décoration comprenant un noyau décor 10 qui comprend du bois, et une portion de fixation 30 moulée sur le noyau décor 10.

Comme on le voit sur la figure 3 qui est une coupe transversale de la même pièce de décoration, le noyau de décor 10 est complètement revêtu d'une matière plastique.

Sur la face arrière, la portion de fixation 30 présente une section en forme de U pour pouvoir être fixée sur un volant de véhicule, et sur la face avant, opposée, une portion de protection 20 recouvre le noyau décor 10.

Pour offrir le noyau décor 10 à la vue des occupants du véhicule, la matière utilisée pour réaliser la portion de protection 20 est transparente ou translucide, c'est-à-dire qu'elle laisse passer complètement ou au moins de manière diffuse la lumière. Par exemple, un vernis polyuréthane est parfaitement adapté pour former la portion de protection 20, car cette matière est transparente et une fois polymérisé, un tel polymère est très résistant à l'usure et aux rayures.

Afin de simplifier la fabrication de la pièce de décoration selon l'invention, la même matière est utilisée pour réaliser la portion de fixation 30, et on peut envisager de réaliser ces deux parties (la portion de protection 20 et la portion de fixation 30) lors de la même opération de fabrication, par exemple une opération de moulage par injection sous pression.

La figure 2 montre la pièce de décoration des figures 1 et 3 montée sur un volant de véhicule. La figure 2 représente en particulier une coupe de la jante d'un tel volant, qui comprend une armature 41 sur laquelle sont réalisés un moussage 42 (en polyuréthane par exemple) qui est recouvert de manière optionnelle par une gaine chauffante 43, le tout étant recouvert par un gainage 44 en cuir par exemple.

Afin de masquer les bords du gainage 44 en cuir, la pièce de décoration est fixée sur la jante par l'intermédiaire de la portion de fixation 30 (par collage par exemple), afin que le noyau décor masque les bords du gainage 44. Enfin, la portion de protection 20 permet de protéger le noyau décor 10 de l'usure et des frottements.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à du bois pour réaliser le noyau décor, mais on peut envisager d'avoir d'autres matières, telles que de la fibre de carbone, de Kevlar, de la fibre de verre, ou même un plastique technique qui reprend l'aspect d'une des matières précitées et qu'il faut protéger et fixer sur le volant.

De plus, il est fait mention d'une fixation de la pièce de décoration sur le volant par collage, mais on peut envisager d'autres moyens de fixation, comme du clipsage par des pattes de clipsage, de la soudure ultrasons par exemple.

## Revendications

1. Pièce de décoration de véhicule agencée pour être montée sur un volant du véhicule, comprenant :
- un noyau décor (10) réalisé dans une matière de décoration telle que du bois,
- une portion de protection (20) du noyau décor (10), en matière transparente ou translucide recouvrant au moins une partie d'une surface du noyau décor (10) agencée pour être visible par un utilisateur,
- une portion de fixation (30) agencée pour fixer la pièce de décoration sur le volant,
**caractérisée en ce que** la portion de fixation (30) est réalisée dans la même matière transparente ou translucide que la portion de protection (20).

2. Pièce de décoration selon la revendication précédente, dans laquelle la portion de fixation (30) présente au moins une section en forme de U.

3. Pièce de décoration selon l'une des revendications précédentes, dans laquelle la matière translucide est du polyuréthane.

4. Pièce de décoration selon l'une des revendications précédentes, dans laquelle la portion de protection (20) et la portion de fixation (30) sont réalisées en une seule et même opération.

5. Pièce de décoration selon l'une des revendications précédentes, dans laquelle le noyau décor (10) est entièrement recouvert par la matière transparente ou translucide.

6. Volant de véhicule comprenant au moins une pièce de décoration selon l'une des revendications 1 à 5.

7. Véhicule automobile comprenant au moins une pièce de décoration selon l'une des revendications 1 à 5.

8. Procédé de fabrication d'une pièce de décoration de véhicule agencée pour être montée sur un volant, comprenant les étapes consistant à :
- positionner dans un moule d'injection un noyau décor (10) réalisé dans une matière de décoration telle que du bois,
- injecter une matière transparente ou translucide de manière à réaliser simultanément :
une portion de protection (20) du noyau décor (10) en matière transparente ou translucide recouvrant au moins une partie d'une surface du noyau décor (10) agencée pour être visible par un utilisateur, et
une portion de fixation (30) agencée pour fixer la pièce de décoration sur le volant, réalisée dans la même matière transparente ou translucide que la portion de protection (20).

## Patentansprüche

1. Fahrzeugdekorelement, das angeordnet ist, um an einem Fahrzeuglenkrad montiert zu werden, umfassend:
- einen Dekorkern (10), der aus einem Dekormaterial wie beispielsweise Holz ausgeführt ist,
- einen Schutzabschnitt (20) des Dekorkerns (10) aus einem transparenten oder lichtdurchlässigen Material, der mindestens einen Teil einer Oberfläche des Dekorkerns (10) abdeckt, das angeordnet ist, um für einen Benutzer sichtbar zu sein,
- einen Befestigungsabschnitt (30), der angeordnet ist, um das Dekorationselement an dem Lenkrad zu befestigen, **dadurch gekennzeichnet, dass** der Befestigungsabschnitt (30) aus dem gleichen transparenten oder lichtdurchlässigen Material wie der Schutzabschnitt (20) ausgeführt ist.

2. Dekorationselement nach dem vorgehenden Anspruch, wobei der Befestigungsabschnitt (30) mindestens einen U-förmigen Abschnitt aufweist.

3. Dekorationselement nach einem der vorhergehenden Ansprüche, wobei das lichtdurchlässige Material aus Polyurethan ist.

4. Dekorationselement nach einem der vorhergehenden Ansprüche, wobei der Schutzabschnitt (20) und der Befestigungsabschnitt (30) in ein und demselben Vorgang ausgeführt werden.

5. Dekorationselement nach einem der vorhergehenden Ansprüche, wobei der Dekorkern (10) vollständig von dem transparenten oder lichtdurchlässigen Material abgedeckt ist.

6. Fahrzeuglenkrad, umfassend mindestens ein Dekorelement nach einem der Ansprüche 1 bis 5.

7. Kraftfahrzeug, umfassend mindestens ein Dekorelement nach einem der Ansprüche 1 bis 5.

8. Herstellungsverfahren eines Fahrzeugdekorelements, das angeordnet ist, um an einem Lenkrad montiert zu werden, umfassend die Schritte bestehend aus:
- Positionieren eines Dekorkerns (10), der aus einem Dekormaterial wie beispielsweise Holz ausgeführt ist, in einer Spritzgussform,
- Einspritzen eines transparenten oder lichtdurchlässigen Materials, sodass Folgendes gleichzeitig ausgeführt wird:
ein Schutzabschnitt (20) des Dekorkerns (10) aus transparentem oder lichtdurchlässigem Material, der mindestens einen Teil einer Oberfläche des Dekorkerns (10) abdeckt, der angeordnet ist, um für einen Benutzer sichtbar zu sein, und ein Befestigungsabschnitt (30), der angeordnet ist, um das Dekorationselement an dem Lenkrad zu befestigen, der in demselben transparenten oder lichtdurchlässigen Material wie der Schutzabschnitt (20) ausgeführt ist.

## Claims

1. A decorative part for a vehicle, arranged to be mounted on a steering wheel of the vehicle, comprising:
- a decorative rim (10) produced from a decorative material such as wood,
- a protective portion (20) for protecting the decorative rim (10), made from a transparent or translucent material covering at least a part of a surface of the decorative rim (10) arranged to be visible to a user,
- an attachment portion (30) arranged to attach the decorative part on the steering wheel,
**characterised in that** the attachment portion (30) is produced from the same transparent or translucent material as the protective portion (20).

2. A decorative part according to the preceding claim, wherein the attachment portion (30) has at least one U-shaped section.

3. A decorative part according to any one of the preceding claims, wherein the translucent material is polyurethane.

4. A decorative part according to any one of the preceding claims, wherein the protective portion (20) and the attachment portion (30) are produced in one and the same operation.

5. A decorative part according to one of the preceding claims, wherein the decorative rim (10) is entirely covered by the transparent or translucent material.

6. A steering wheel comprising at least one decorative part according to any one of claims 1 to 5.

7. An automobile vehicle comprising at least one decorative part according to any one of claims 1 to 5.

8. A process for manufacturing a vehicle decorative part arranged to be mounted on a steering wheel, comprising the following steps:
- positioning a decorative rim (10) produced from a decorative material such as wood in an injection mould,
- injecting a transparent or translucent material so as to produce simultaneously:
a protective portion (20) of the decorative rim (10) made from a transparent or translucent material covering at least a part of a surface of the decorative rim (10) arranged to be visible to a user, and
an attachment portion (30) arranged to attach the decorative part to the steering wheel, made from the same transparent or translucent material as the protective portion (20).
